Europäisches Patentamt

European Patent Office

Office européen des brevets

(19)

(11) Numéro de publication : **0 450 998 A1**

## (12) DEMANDE DE BREVET EUROPEEN

(21) Numéro de dépôt : **91400640.8**

(22) Date de dépôt : **07.03.91**

(51) Int. Cl.⁵ : **H02M 3/158**

(30) Priorité : **05.04.90 FR 9004391**

(43) Date de publication de la demande :
**09.10.91 Bulletin 91/41**

(84) Etats contractants désignés :
**DE GB**

(71) Demandeur : **DASSAULT ELECTRONIQUE**
**55, quai Marcel Dassault**
**F-92214 Saint-Cloud (FR)**

(72) Inventeur : **Lorec, Gérard**
**15, avenue du Lycée Lakanal**
**F-92340 Bourg-la-Reine (FR)**

(74) Mandataire : **Plaçais, Jean-Yves et al**
**Cabinet Netter, 40, rue Vignon**
**F-75009 Paris (FR)**

(54) Générateur de courant perfectionné.

(57) Le dispositif de génération de courant comprend : une entrée pour une source d'alimentation sous tension continue, avec une première borne d'entrée (BE1) et une deuxième borne d'entrée (BE2), une sortie (BS1, BS2) pour une charge (CH), une inductance (L) possédant une borne aval (LV) reliée à la sortie (BS1) et une borne amont (LM), et des moyens de commutation (Q5,Q6,Q8). Ces derniers possèdent, un premier état dans lequel ils autorisent la circulation d'un courant amont-aval à travers l'inductance (L) alimentée par la source, un deuxième état dans lequel ils autorisent la circulation d'un courant amont-aval à travers l'inductance (L) et sa réinjection dans la source, et un troisième état dans lequel ils autorisent la circulation d'un courant amont-aval à travers l'inductance (L) et à travers la charge. Des moyens de commande sont propres à commander les moyens de commutation selon une séquence de période choisie, à placer successivement au sein de chaque période, les moyens de commutation dans leur premier état puis dans l'un au moins de leurs deuxième et troisième états, et à moduler, au sein de ladite période, les durées respectives de placement des moyens de commutation dans leurs états correspondants.

EP 0 450 998 A1

FIG.1

L'invention concerne les générateurs de courant.

Dans certaines applications, il peut s'avérer particulièrement avantageux qu'un tel générateur soit capable de passer, dans un très bref délai, d'un état dans lequel il ne débite aucun courant dans une charge connectée à ses bornes, à un état dans lequel il débite un courant relativement important dans celle-ci.

On ne connaît pas actuellement de générateur de courant capable de réaliser de telles performances tout en présentant une structure aisément réalisable à un coût industriellement raisonnable.

L'invention vient apporter une solution plus satisfaisante à ce problème.

Un but de l'invention est de proposer un générateur de courant capable de délivrer très rapidement un courant important dans une charge lorsque celle-ci le requiert.

Un autre but de l'invention consiste à réaliser un tel générateur de courant de façon simple.

Selon une caractéristique générale de l'invention, le générateur de courant proposé comprend :

– une entrée pour une source d'alimentation sous tension continue, avec une première borne d'entrée et une deuxième borne d'entrée,
– une sortie pour une charge,
– une inductance possédant une borne aval reliée à la sortie et une borne amont,
– des moyens de commutation possédant

* un premier état dans lequel ils relient la borne amont de l'inductance à la première borne d'entrée et sa borne aval à la deuxième borne d'entrée pour autoriser la circulation d'un courant amont-aval à travers l'inductance alimentée par la source,
* un deuxième état dans lequel ils autorisent la circulation d'un courant amont-aval à travers l'inductance et sa réinjection dans la source,
* un troisième état dans lequel ils autorisent la circulation d'un courant amont-aval à travers l'inductance et à travers la charge, et
– des moyens de commande propres

* à commander les moyens de commutation selon une séquence de période choisie,
* à placer successivement au sein de chaque période, les moyens de commutation dans leur premier état puis dans l'un au moins de leurs deuxième et troisième états, et
* à moduler, au sein de ladite période, les durées respectives de placement des moyens de commutation dans leurs états correspondants.

D'autres avantages et caractéristiques de l'invention apparaîtront à l'examen de la description détaillée ci-après et des dessins annexés sur lesquels :

– la figure 1 est un synoptique schématique d'un mode de réalisation du dispositif selon l'invention,

– les figures 2 à 4 illustrent trois chronogrammes de fonctionnement du dispositif de la figure 1, et
– la figure 5 illustre encore un diagramme représentatif du fonctionnement du dispositif de la figure 1.

Les dessins comportent pour l'essentiel des éléments de caractère certain. A ce titre ils font partie intégrante de la description et pourront non seulement servir à mieux faire comprendre la description détaillée ci-après mais aussi contribuer, le cas échéant, à la définition de l'invention.

On suppose maintenant que la charge connectée aux bornes du générateur de courant est de nature capacitive, par exemple une source de tension, bien que l'invention ne soit pas limitée à ce type de charge.

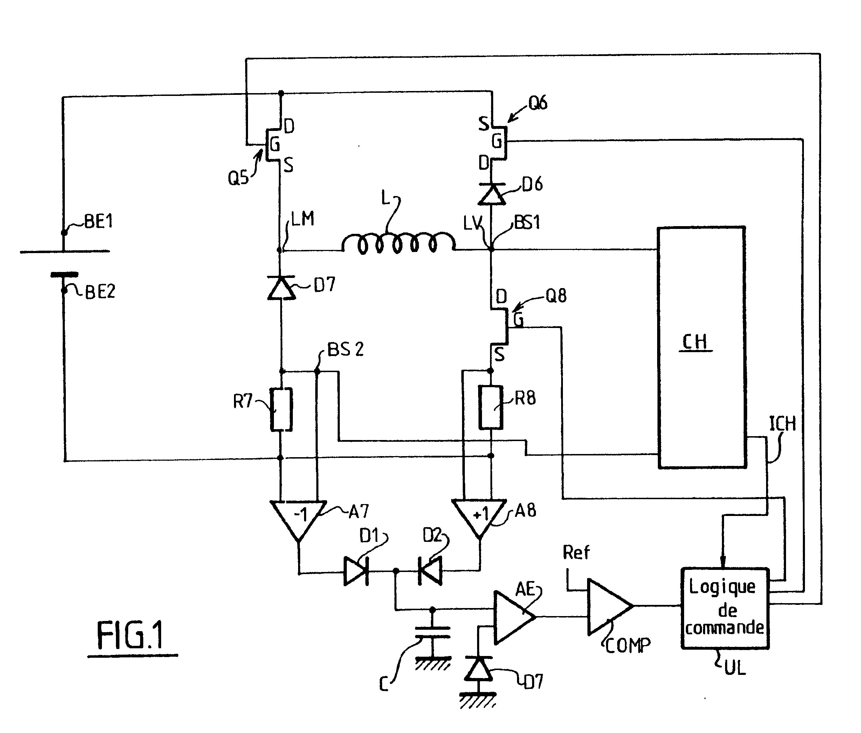

Sur la figure 1, les bornes BE1 et BE2 désignent respectivement une première borne d'entrée et une deuxième borne d'entrée (qui peut être reliée à la masse) pour une source d'alimentation sous tension continue.

Un élément essentiel de l'invention consiste en une inductance L dont les deux bornes amont LM et aval LV sont reliées aux deux bornes BE1 et BE2 par quatre unités de commutation montées en pont complet.

La première unité de commutation relie la borne amont LM de l'inductance à la première borne d'entrée BE1 et possède, d'une façon générale, un état de blocage du courant ainsi qu'un état passant autorisant le passage du courant dans le sens de la borne d'entrée BE1 vers la borne amont LM de l'inductance L. Cette première unité de commutation est représentée ici par un transistor de puissance à effet de champ Q5 dont la source est reliée à la borne amont LM de l'inductance et dont le drain est relié à la borne BE1.

La deuxième unité de commutation relie la borne aval LV de l'inductance à la borne d'entrée BE1 et possède, d'une façon générale, un état de blocage du courant ainsi qu'un état passant autorisant le passage du courant de la borne aval de l'inductance vers la première borne d'entrée BE1. Cette deuxième unité de commutation comporte ici un autre transistor à effet de champ Q6 monté en série avec une diode D6 ou redresseur. La source du transistor Q6 est reliée au drain du transistor Q5 et donc à la borne BE1 tandis que l'anode de la diode D6 est reliée à la borne aval LV de l'inductance L.

La troisième unité de commutation relie la borne amont LM de l'inductance à la deuxième borne d'entrée BE2 et possède, d'une façon générale, un état de blocage interdisant le passage du courant dans le sens de la borne amont de l'inductance vers cette deuxième borne d'entrée ainsi qu'un état passant autorisant le passage du courant dans le sens opposé. Cette unité comporte ici une diode D7 dont la cathode est reliée à la borne amont LM de l'inductance et dont l'anode est reliée à la borne BE2 par l'intermédiaire d'une résistance R7 dont la fonction sera explicitée ci-après.

La quatrième unité de commutation relie la borne aval LV de l'inductance à la borne BE2 et possède, d'une façon générale, un état de blocage du courant ainsi qu'un état passant autorisant le passage du courant dans le sens de la borne aval de l'inductance vers la borne BE2. Elle comporte ici un transistor à effet de champ Q8 dont le drain est relié à la borne aval LV de l'inductance et dont la source est reliée à la borne BE2 par une autre résistance R8 dont la fonction sera également explicitée ci-après.

On a représenté ici, à des fins de simplification, pour chaque unité de commutation, un seul transistor à effet de champ éventuellement associé à un redresseur. Cependant, dans certaines applications, chaque unité de commutation peut se composer d'une pluralité de transistors de puissance montés en parallèle et éventuellement associés à une pluralité de redresseurs.

Lorsque la fréquence de commutation peut atteindre 200 à 300 kHz, et lorsque le courant à commuter est de l'ordre de quelques ampères, on peut utiliser des transistors à effet de champ du type VMOS tels que ceux commercialisés par la Société des Etats-Unis INTERNATIONAL RECTIFIER sous la référence IRF PE 50.

Dans d'autres applications nécessitant des contraintes de puissance et de fréquence de commutation moins sévères, on peut utiliser d'autres types de transistors, par exemple des transistors bipolaires.

Les grilles respectives de ces transistors à effet de champ sont reliées à une logique de commande UL propre à les commander selon une séquence de période choisie ainsi qu'on le verra ci-après. Cette logique de commande UL est également propre à recevoir de la charge CH une information ICH représentative de l'appel de courant de celle-ci. En fait dans le cas présent, ainsi qu'on le verra, une telle information ICH peut être obtenue en mesurant un écart de tension entre la tension disponible aux bornes de la charge et une tension nominale.

La borne aval LV de l'inductance L définit, pour le générateur, une première borne de sortie pour la charge CH tandis que l'anode de la diode D7 définit une deuxième borne de sortie BS2 pour la charge. Cette borne BS2 est donc reliée à la deuxième borne d'entrée BE2.

Il est également prévu, au sein de ce générateur, des moyens de régulation de courant dont les résistances R7 et R8 font partie. Ceux-ci comportent, en outre, un amplificateur A7 de gain -1 connecté, en parallèle aux bornes de la résistance R7 ainsi qu'un autre amplificateur A8, de gain 1, connecté en parallèle aux bornes de la résistance R8. La sortie de l'amplificateur A7 est reliée à l'anode d'une diode D1 tandis que la sortie de l'amplificateur A8 est reliée à l'anode d'une diode D2. Les cathodes respectives de ces deux diodes sont reliées ensemble à une première entrée d'un amplificateur d'erreur AE, dont la deuxième entrée reçoit une tension de référence, obtenue ici par une diode Zener DZ dont l'anode est reliée à la masse.

Une capacité de filtrage C relie également les cathodes des diodes D1 et D2 à la masse.

La sortie de l'amplificateur d'erreur AE est reliée à une première entrée d'un comparateur COMP dont l'autre entrée est propre à recevoir une tension de référence en dents de scie REF. La sortie de ce comparateur est reliée à la logique de commande UL.

Le principe général de fonctionnement du dispositif selon l'invention repose notamment sur le fait que les moyens de commutation, que composent les quatres unité de commutation, possèdent trois états, à savoir :

– un premier état dans lequel ils relient la borne amont LM de l'inductance L à la borne d'entrée BE1 et sa borne aval LV à la borne BE2 pour autoriser la circulation d'un courant amont-aval à travers l'inductance L alimentée par la source. En d'autres termes, on peut assimiler ce premier état à un état de "charge" de l'inductance L par la source ;

– un deuxième état dans lequel ils autorisent la circulation d'un courant amont-aval à travers l'inductance L, c'est-à-dire un courant circulant depuis la borne amont LM vers la borne aval LV, et sa réinjection dans la source. Ce deuxième état peut être assimilé ainsi à un état de "décharge" de l'inductance L dans la source, ou encore à une restitution à la source de l'énergie emmagasinée dans l'inductance ;

– un troisième état dans lequel ils autorisent la circulation d'un courant amont-aval à travers l'inductance L et à travers la charge. Ce troisième état peut alors être assimilé à une restitution de l'énergie emmagasinée par l'inductance L à la charge CH.

La logique de commande UL est propre alors à commander les moyens de commutation selon une séquence de période T choisie, dont la valeur dépend de l'application. Au cours de chaque période, la logique de commande place successivement les moyens de commutation dans leur premier état puis dans l'un au moins de leurs deuxième et troisième états. De plus, cette logique de commande est propre à moduler, au sein de ladite période, les durées respectives de placement des moyens de commutation dans leurs états correspondants.

D'un point de vue pratique, dans le premier état, les première et quatrième unités de commutation Q5 et Q8 sont dans leur état passant respectif, tandis que les autres unités de commutation Q6,D6 et D7 (la diode D7 ne conduisant pas) sont dans leur état de blocage respectif. En d'autres termes, le courant circule depuis la borne d'entrée BE1 à travers le transistor Q5 puis à travers l'inductance L et à travers le transistor Q8 et la résistance R8 jusqu'à la borne d'entrée BE2.

Dans le deuxième état, les première et quatrième unités de commutation Q5, Q8 sont dans leur état de blocage respectif, tandis que les autres unités de commutation sont dans leur état passant respectif. En d'autres termes, la borne amont LM de l'inductance est reliée à la borne BE2 (diode D7 conduisant) et le courant, circulant dans l'inductance dans le sens amont-aval traverse la diode D6 et le transistor Q6 pour être réinjecté à la borne BE1 de la source.

Dans le troisième état, seule la première unité de commutation Q5 est dans son état passant tandis que les autres sont dans leur état de blocage respectif. En d'autres termes, il y a circulation depuis la source d'un courant à travers le transistor Q5, à travers l'inductance dans le sens amont-aval et à travers la charge CH.

On suppose maintenant que le dispositif fonctionne en régime établi, c'est-à-dire que l'inductance L a été chargée avec une quantité d'énergie prédéterminée correspondant à la puissance maximale susceptible d'être consommée par la charge CH. En d'autres termes, on suppose qu'un courant sensiblement constant I0 circule à travers l'inductance L. On suppose également ici que, dans le troisième état, la surtension produite par l'inductance L au cours des commutations est au moins égale à la tension aux bornes de la charge CH.

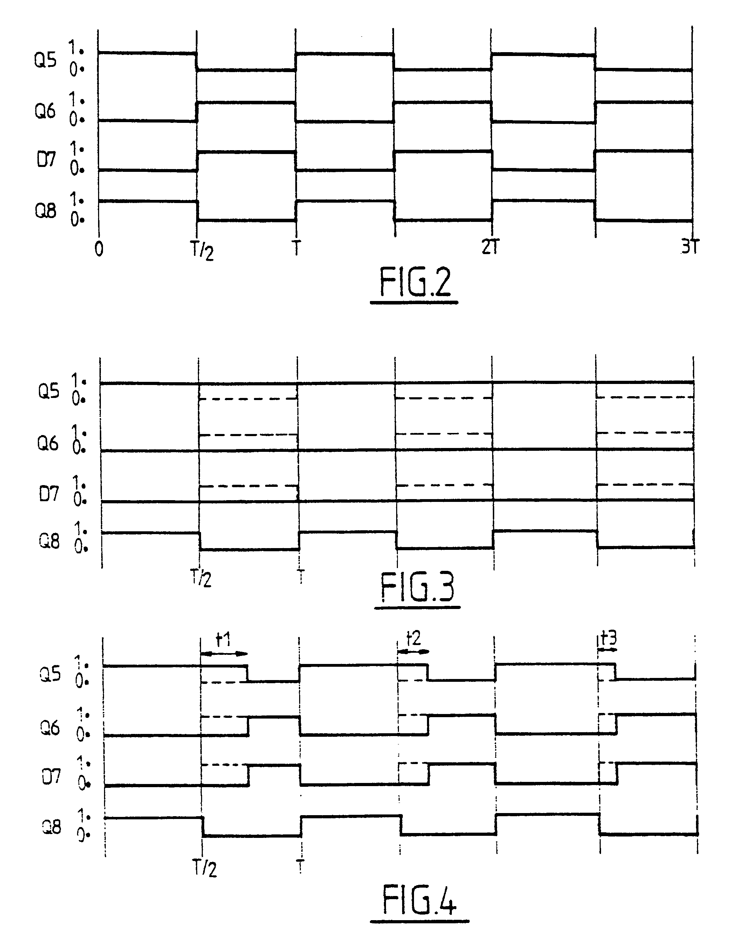

La figure 2 illustre un chronogramme de fonctionnement du générateur correspondant à une configuration dans laquelle aucun courant n'est débité dans la charge CH, celle-ci délivrant une tension égale à sa valeur nominale. En d'autres termes, le générateur fonctionne ici "à vide".

Pendant une durée sensiblement égale à la moitié de la période T, les moyens de commutation sont dans leur premier état. Les transistors Q5 et Q8 sont passants et la diode D7 ne conduit pas. Aussi, un courant I circule dans l'inductance L et dans la résistance R8 et sa valeur croît depuis la valeur I0. A l'instant $\frac{T}{2}$, les moyens de commutation sont placés dans leur deuxième état. Les transistors Q5 et Q8 sont dans leur état de blocage tandis que le transistor Q6 est dans son état passant, la diode D7 conduisant. Le courant décroît alors dans l'inductance depuis sa valeur maximale jusqu'à atteindre la valeur I0.

Si le générateur de courant présentait un rendement idéal de 100%, l'instant de commutation serait rigoureusement égal à $\frac{T}{2}$. Cependant, l'homme du métier sait qu'un tel générateur présente des pertes conduisant à un décalage de cet instant de commutation théorique. Il convient donc de maintenir cet instant de commutation au voisinage de $\frac{T}{2}$. C'est le rôle des moyens de régulation.

L'amplificateur A8, connecté en parallèle aux bornes de la résistance R8 fournit en sa sortie une tension représentative du courant circulant dans la résistance R8. De même, l'amplificateur A7 fournit en sa sortie une tension représentative du courant circulant dans la résistance R7. L'amplificateur inverseur A7 permet d'inverser le signe de la tension aux bornes de la résistance R7 et de fournir ainsi une tension de même signe que celle disponible en sortie de l'amplificateur A8 (en effet, le courant circulant dans la résistance R7 est de sens opposé au courant circulant dans la résistance R8).

Les deux diodes D1 et D2 réunies par leurs cathodes respectives réalisent une fonction "OU" fournissant, après filtrage par la capacité C, une tension présentant une évolution continue. En d'autres termes, on réalise ici une moyenne des courants circulant respectivement dans la résistance R8 et dans la résistance R7, c'est-à-dire pendant que les moyens de commutation sont dans leur premier état puis dans leur deuxième état.

L'écart entre l'instant de commutation réel et l'instant théorique $\frac{T}{2}$ conduit à une différence entre les allures des tensions aux bornes des résistances R8 et R7 ce qui se traduit par un signal correspondant en sortie du comparateur COMP. Ce signal, fourni à la logique de commande UL, permet à celle-ci, par action sur les grilles de commande des transistors, de moduler la durée de placement des moyens de commutation dans leur premier et leur deuxième états. En d'autres termes, l'instant de commutation du premier état au deuxième état est modulé d'une valeur epsilon par rapport à l'instant théorique $\frac{T}{2}$. Le courant circulant dans l'inductance est ainsi regulé en permanence pour être maintenu sensiblement à la valeur I0.

L'homme du métier remarquera que, dans le deuxième état des moyens de commutation, la réinjection du courant depuis l'inductance L dans la source est possible puisque la tension aux bornes de la charge CH est supérieure à la tension de la source d'entrée.

De plus, la présence de la diode D6 évite, lorsque les moyens de commutation sont dans leur premier état (Q5 et Q8 passants), un court-circuit de l'inductance L par la conduction de la diode équivalente source-drain du transistor Q6.

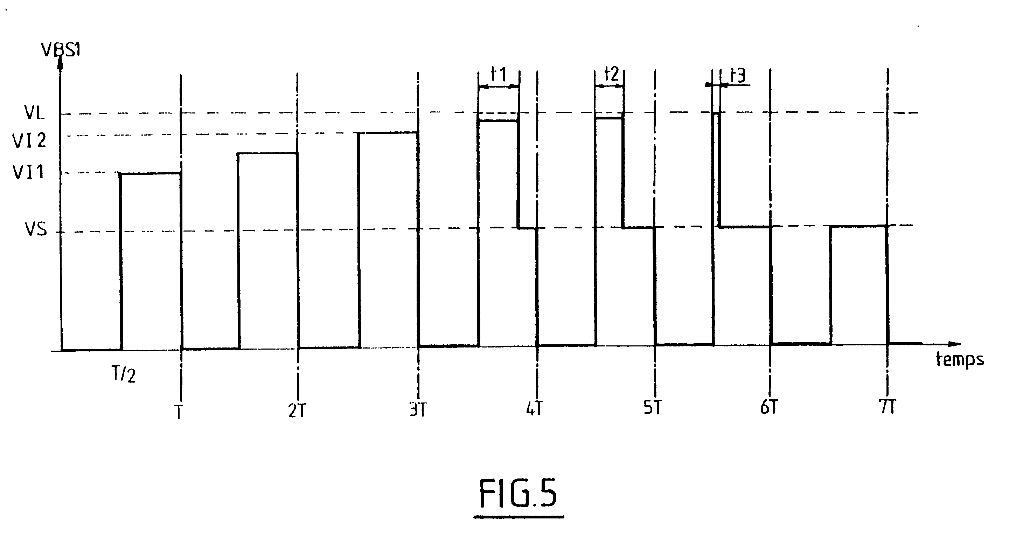

Les figures 3 et 4 illustrent des chronogrammes de fonctionnement du générateur relatifs respectivement à de fort et de faible appels de courant de la charge CH correspondant par exemple à une chute de tension délivrée par cette charge. On s'appuiera également, pour décrire de type de fonctionnement, sur la figure 5 qui illustre l'évolution de la tension VBS1 en sortie de ce générateur.

On suppose que, lorsque la charge CH délivre effectivement sa tension nominale, c'est-à-dire ne nécessite pas d'appel de courant du générateur, la tension en la borne BS1 est égale à une tension limite VL.

Lorsque la valeur de la tension aux bornes de la charge CH chute par rapport à la tension nominale, une information ICH représentative de cet écart de tension, et, par voie de conséquence représentative de l'appel de courant qui sera nécessaire pour rétablir la tension à son niveau nominal, est transmise à la logique de commande UL.

Celle-ci va alors placer, au sein de chaque période, les moyens de commutation successivement dans leur premier état pendant une durée égale à la moitié de la période, puis dans leur troisième état pendant le reste de la période ou pendant une durée inférieure en fonction de l'information ICH.

Ainsi, si l'on suppose que la chute de tension est importante, correspondant donc à un fort appel de courant, la logique de commande va, au cours de plusieurs périodes successives, placer alternativement les moyens de commutation, au cours de chaque période, dans leur premier état pendant la moitié de la période et dans leur troisième état pendant l'autre moitié de la période ce qui aura pour conséquence de faire évoluer la tension VBS1 depuis sa valeur VI1, comprise entre la valeur VS de la tension aux bornes de la source et la valeur limite VL, jusqu'à une valeur VI2 voisine de la valeur limite VL.

A partir de là, la logique de commande va progressivement réduire le temps de placement des moyens de commutation dans leur troisième état pour les placer, pendant le reste de la période à nouveau dans leur deuxième état. En d'autres termes, au cours de la quatrième période (figure 5) par exemple, les moyens de commutation sont placés dans leur premier état pendant la durée $\frac{T}{2}$, puis dans leur troisième état pendant la durée t1, puis dans leur deuxième état pendant la durée T-t1. Au fur et à mesure des commutations, la tension VBS1 tend vers la tension limite VL correspondant à la tension nominale de la charge et conduit donc à une réduction des durées t2 et t3 pendant lesquelles les moyens de commutation sont placés dans leur troisième état.

Lorsque la tension nominale est atteinte, ou encore lorsque la tension VBS1 a atteint la valeur limite VL, la logique de commande, en réponse à la réception de l'information ICH, remet le générateur dans sa configuration de fonctionnement à vide plaçant alternativement les moyens de commutation dans leur premier et leur deuxième états.

L'homme du métier remarquera également, que, lorsque le courant traverse la charge CH, celui-ci traverse également la résistance R7. Il n'y a donc pas discontinuité d'information au niveau de l'amplificateur d'erreur AE.

On a décrit ci-avant un fonctionnement du dispositif offrant une montée progressive de la tension de la charge vers sa valeur nominale s'étendant sur plusieurs périodes, notamment par des réductions progressives des valeurs t1, t2 et t3. On pourrait bien entendu concevoir des chronogrammes de fonctionnement permettant une montée plus rapide et plus brutale de la tension.

Le générateur de courant ainsi décrit offre donc une inductance dans laquelle circule en permanence un courant nominal correspondant à l'énergie maximale requise par la charge CH. Lorsque cette dernière ne provoque pas d'appel de courant, le courant I0 est réinjecté dans la source d'entrée. Par contre, en cas d'appel de courant, l'énergie emmagasinée par l'inductance L est quasi-immédiatement disponible pour alimenter la charge avec le courant I0. On obtient un gain de temps appréciable, par rapport à une situation classique dans laquelle le courant devrait passer de la valeur nulle à la valeur I0.

On a décrit ci-avant un fonctionnement du générateur en régime établi. Pendant le régime transitoire nécessaire à l'établissement d'un courant de valeur I0 nominale circulant dans l'inductance, les moyens de commutation sont alternativement placés dans leur premier état ("charge" de l'inductance par la source) puis dans leur troisième état ("restitution" de l'énergie à la charge) jusqu'à l'établissement de la tension nominale aux bornes de la charge CH. On remarque donc que ce régime transitoire est analogue à un fonctionnement du générateur, en régime établi, sous fort appel de courant.

Les chronogrammes de fonctionnement des unités de commutation peuvent être éventuellement modifiés en fonction des caractéristiques de celles-ci. Ainsi, lorsque ces unités de commutation sont des transistors de puissance à effet de champ, une solution consiste à prévoir un temps de blocage pour tous les transistors pour éviter la charge de la capacité parasite drain-source dans la maille de puissance et pour assurer une bonne régulation à vide du dispositif.

L'invention n'est pas limitée au mode de réalisation ci-dessus décrit, mais en embrasse toutes les variantes contenues dans le cadre des revendications ci-après, notamment la suivante :

    – on pourrait envisager de placer, en série avec le redresseur D7, un transistor à effet de champ Q7 dont la source serait reliée à l'anode de la diode D7 et dont le drain serait relié à la résistance R7.

Bien entendu, certains des moyens décrits ci-dessus peuvent être omis dans les variantes où ils ne servent pas.

## Revendications

1. Dispositif de génération de courant, caractérisé en ce qu'il comprend :

    – une entrée pour une source d'alimentation sous tension continue, avec une première borne d'entrée (BE1) et une deuxième borne d'entrée (BE2),

    – une sortie (BS1, BS2) pour une charge (CH),

    – une inductance (L) possédant une borne aval (LV) reliée à la sortie (BS1) et une borne amont (LM),

    – des moyens de commutation (Q5,Q6,Q8) possédant

        * un premier état dans lequel ils relient la borne amont (LM) de l'inductance (L) à la première borne d'entrée (BE1) et sa borne aval (LV) à la deuxième borne d'entrée (BE2) pour autoriser la circulation d'un courant amont-aval à travers l'inductance (L) alimentée par la source,

        * un deuxième état dans lequel ils autorisent la circulation d'un courant amont-aval à travers l'inductance (L) et sa réinjection dans la source,

        * un troisième état dans lequel ils autorisent la circulation d'un courant amont-aval à travers l'inductance (L) et à travers la charge, et

    – des moyens de commande propres

        * à commander les moyens de commutation selon une séquence de période choisie,

        * à placer successivement au sein de chaque période, les moyens de commutation dans leur premier état puis dans l'un au moins de leurs deuxième et troisième états, et

        * à moduler, au sein de ladite période, les durées respectives de placement des moyens de commutation dans leurs états correspondants.

2. Dispositif selon la revendication 1, caractérisé en ce que, dans le deuxième état, les moyens de commutation relient la borne amont (LM) de l'inductance (L) à la deuxième borne d'entrée (BE2) et sa borne aval (LV) à la première borne d'entrée (BE1),

et en ce que, dans le troisième état, ils relient la borne amont (LM) de l'inductance (L) à la première borne d'entrée (BE1).

3. Dispositif selon l'une des revendications 1 et 2, caractérisé en ce que les moyens de commutation comportent :

    – une première unité de commutation (Q5) reliant la borne amont (LM) de l'inductance (L) à la première borne d'entrée (BE1) et possédant un état de blocage du courant ainsi qu'un état passant autorisant le passage du courant dans le sens de la première borne d'entrée (BE1) vers la borne amont (LM) de l'inductance (L),

    – une deuxième unité de commutation (Q6,D6) reliant la borne aval (LV) de l'inductance (L) à la première borne d'entrée (BE1) et possédant un état de blocage du courant ainsi qu'un état passant autorisant le passage du courant dans le sens de la borne aval (LV) de l'inductance (L) vers la première borne d'entrée (BE1),

    – une troisième unité de commutation (D7) reliant la borne amont (LM) de l'inductance (L) à la deuxième borne d'entrée (BE2) et possédant un état de blocage interdisant le passage du courant dans le sens de la borne amont (LM) de l'inductance (L) vers la deuxième borne d'entrée (BE2) ainsi qu'un état passant autorisant le passage du courant dans le sens opposé, et

    – une quatrième unité de commutation (Q8) reliant la borne aval (LV) de l'inductance (L) à la deuxième borne d'entrée (BE2) et possédant un état de blocage du courant ainsi qu'un état passant autorisant le passage du courant dans le sens de la borne aval (LV) de l'inductance (L) vers la deuxième borne d'entrée (BE2),

en ce que, dans ledit premier état, les première (Q5) et quatrième ( Q8 ) unités de commutation sont dans leur état passant respectif, tandis que les autres unités de commutation (Q6,D6 ; D7) sont dans leur état de blocage respectif,

    – en ce que dans ledit deuxième état, les première (Q5) et quatrième (Q8) unités de commutation sont dans leur état de blocage respectif, tandis que les autres unités de commutation (Q6,D6 ; D7) sont dans leur état passant respectif,

et en ce que, dans ledit troisième état, les deuxième (Q6,D6), troisième (D7) et quatrième (Q8) unités de commutation sont dans leur état de blocage respectif, tandis que la première (Q5) unité de commutation est dans son état passant.

4. Dispositif selon la revendication 3, caractérisé en ce que la première unité de commutation comporte au moins un transistor à effet de champ (Q5) dont le drain est relié à la première borne d'entrée (BE1) et dont la source est reliée à la borne amont (LM) de l'inductance (L),

en ce que la deuxième unité de commutation comporte au moins un transistor à effet de champ (Q6) et un redresseur (D6) montés en série, la source du transistor étant reliée à la première borne d'entrée (BE1) et l'anode du redresseur étant reliée à la borne aval (LV) de l'inductance (L),

en ce que la troisième unité de commutation comporte au moins un redresseur (D7) dont la cathode est reliée à la borne amont (LM) de l'inductance (L) et dont l'anode est reliée à la deuxième borne d'entrée ( BE2 ),

et en ce que la quatrième unité de commutation comporte au moins un transistor à effet de champ (Q8) dont le drain est relié à la borne aval (LV) de l'inductance (L) et dont la source est reliée à la deuxième borne d'entrée (BE2).

5. Dispositif selon la revendication 4, caractérisé en ce que la troisième unité de commutation comporte au moins un transistor à effet de champ (Q7) monté en série avec le redresseur (D7) et dont le drain est relié à la deuxième borne d'entrée (BE2).

6. Dispositif selon l'une des revendications précédentes, caractérisé en ce que les moyens de commande sont propres à faire passer les moyens de commutation dans leur deuxième état ou leur troisième état au sein d'une période en fonction d'une mesure représentative de l'appel de courant de la charge (CH).

7. Dispositif selon la revendication 6, caractérisé en ce que la mesure représentative de l'appel de courant de la charge (CH) est effectuée dans la charge.

8. Dispositif selon la revendication 7, dans lequel la charge est propre à délivrer une tension nominale à ses bornes, caractérisé en ce que ladite mesure correspond à une mesure de l'écart entre la tension délivrée par la charge et la tension nominale.

9. Dispositif selon l'une des revendications précédentes, caractérisé en ce que les moyens de commande comprennent des moyens de régulation de courant propres à effectuer, au cours de ladite période, la moyenne du courant circulant dans le dispositif pendant que les moyens de commutation sont placés dans le premier état, et du courant circulant dans le dispositif pendant le reste de ladite période.

FIG.1

EP 0 450 998 A1

FIG.2

FIG.3

FIG.4

FIG.5

EP 0 450 998 A1

**Office européen des brevets**

# RAPPORT DE RECHERCHE EUROPEENNE

Numero de la demande

EP    91 40 0640

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| A | US-A-4761722 (PRUITT)<br>* le document en entier *<br>----- | 1, 6-9 | H02M3/158 |

**DOMAINES TECHNIQUES RECHERCHES (Int. Cl.5 )**

H02M

Le présent rapport a été établi pour toutes les revendications

| Lieu de la recherche | Date d'achèvement de la recherche | Examinateur |
|---|---|---|
| LA HAYE | 07 MAI 1991 | VAN DEN DOEL J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
 
& : membre de la même famille, document correspondant

EPO FORM 1503 03.82 (P0402)